# EUROPEAN PATENT APPLICATION

(11) **EP 4 481 535 A1**
(43) Date of publication of application: **25.12.2024**
(21) Application number: 23180025.1
(22) Date of filing: 19.06.2023
(51) Int. Cl.: G06F 1/26

(54) **METHODS AND CIRCUITS IN PROGRAMMABLE POWER SUPPLY SYSTEMS**

(71) Applicant: INTEL Corporation, Santa Clara, CA 95054 (US)
(72) Inventor: TAN, Chuen Ming, 11960 Bayan Lepas, Penang (MY); VERMA, Ravi, 560035 Bengaluru, Karnataka (IN); CHAUHAN, Shailendra Singh, 560066 Bengaluru, Karnataka (IN); GUNNAM, Venkata Mahesh, 533234 Yeditha, Mandapeta, East Godavari, Andhra Pradesh (IN); BHALSOD, Saunak, 382424 Ahmedabad, Gujarat (IN); RAO, Archana, 560076 Bangalore (IN); SEKAR, Sathiya Seelan, 636302 Salem, Tamil Nadu (IN)
(74) Representative: Viering, Jentschura & Partner mbB Patent- und Rechtsanwälte

(57) **Abstract**

A circuit may include: a first terminal couplable to an input port, the first terminal is configured to receive a variable supply voltage; a second terminal couplable to an input of a voltage regulator; a switch device configured to couple the first terminal and the second terminal; and a controller configured to: control the switch device; generate a first voltage based on a voltage level determined for the variable supply voltage; and provide, based on a comparison between the first voltage and a second voltage at the second terminal, a control signal to activate or deactivate the voltage regulator.

## Description

### Technical Field

This disclosure generally relates to the field of electronic circuits, and more specifically, to methods and circuits in programmable power supply circuits of a device, in particular of a universal serial bus (USB) device.

### Background

Many electronic devices rely on programmable voltage supply systems, since such systems may offer dynamic control over power management and energy efficiency through precise control and adjustment of voltage levels based on requirements of the electronic device in terms of power. The use of programmable voltage supply systems, in particular in electronic devices that may receive or supply power via a USB interface in accordance with designated USB protocols, may present various challenges that may include maintaining stable power delivery, ensuring compatibility with specifications of designated USB protocols, and managing the trade-off between performance and power consumption.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 depicts an exemplary generic programmable power supply system;
FIG. 2 shows an illustration with respect to logical structure of USB PD capable devices;
FIG. 3 shows an exemplary illustration of two USB PDCDs in accordance with various aspects of this disclosure;
FIG. 4 shows an illustration of a negotiation operation for PD operation;
FIG. 5 illustrates an exemplary circuit in accordance with various aspects provided in this disclosure;
FIG. 6 shows an exemplary illustration of a switch device and a controller in accordance with various aspects provided herein;
FIG. 7 shows schematically an example of an electronic device including a circuit as described in accordance with various aspects of this disclosure;
FIG. 8 shows an exemplary timing diagram including control signal described in various aspects provided in this disclosure;
FIG. 9 shows an exemplary illustration of a voltage-time diagram;
FIG. 10 shows an exemplary graph of emulated signals in accordance with various aspects of this disclosure;
FIG. 11 shows an example of a method;
FIG. 12 shows an exemplary flow diagram of various aspects provided in this disclosure.

### Description

The following detailed description refers to the accompanying drawings that show, by way of illustration, exemplary details, and aspects in which aspects of the present disclosure may be practiced.

Programmable power supplies may support relatively higher voltages/currents to a power supply line of an electronic device, which may harm certain components of the electronic device, which the components are connected to the power supply line. Furthermore, in certain aspects, the power supply line may be connected to an input port, which the input port may receive the supplied power via a detachable connector. When the connector is detached from the input port while the electric power supply has not been cut off properly, such relatively higher voltages/currents may further cause arcing as well. Various aspects are provided in this disclosure to manage operations of a device which may provide or receive programmable electrical supply power. Aspects are disclosed in accordance with exemplary implementation in compliant with USB technology and present USB specifications. The skilled person may recognize that some of the aspects may be implemented in a non-USB programmable power supply systems.

Evolving USB technology allows devices to require more dynamic and flexible power delivery solutions. Traditionally, the USB interface was used primarily for low power devices and data transfer, but now the USB technology has evolved to deliver power up to 240 Watts, with a supplied voltage up to 48V and a current up to 5A, which may be varied in designated granularities. USB devices, particularly those supporting USB Power Delivery (USB PD), can negotiate for different voltage levels based on their current power requirements. In some aspects, managing transitions of supply voltage or supply current effectively, without introducing instability or inefficiencies in power transfer, may be a complex task. Furthermore, it may be desirable to ensure that the device remains protected from potential power-related issues such as overvoltage, overcurrent, inrush current, and electrical arcing, which could lead to component damage, impaired performance, or even safety hazards.

Furthermore, the USB interface may provide support for various USB specifications. The USB specifications has evolved from USB 2.0 to USB 3.x, now to USB Type-C and USB4, each may have its own characteristics in terms of power delivery capabilities. It is important for devices to maintain compatibility with multiple USB standards, which may result in certain challenges in designing programmable voltage supply systems, as such systems are expected to be adaptable enough to accommodate the varying power requirements of different USB interfaces while still maintaining their performance in terms of reliability and efficiency for delivering power.

Various aspects provided herein may relate to programmable voltage supply systems, with a particular emphasis on Universal Serial Bus (USB) devices. Aspects may include methods and circuits configured to enhance the functionality and reliability of programmable voltage supply systems in USB devices, in particular of a source device that supplies the power and of a sink device that receives the supplied power. Aspects may apply to a wide range of USB devices, including those equipped with USB Type-C connectors and USB Power Delivery (USB PD) protocols, as well as devices utilizing legacy USB interfaces or non-USB devices.

The apparatuses and methods of this disclosure may utilize or be related to USB technologies. While some examples may refer to specific USB technologies, the examples provided herein may be similarly applied to various other interfaces to supply power, both existing and not yet formulated, particularly in cases where such interface technologies share similar features as disclosed regarding the following examples. Various exemplary USB technologies that the apparatuses and methods described herein may utilize include operations in accordance with various USB specifications including, but are not limited to: USB 2.0 specification (08/10/2021), USB 2.0 Cable and Connector Class Document (01/08/2007), any USB 3.x base specification such as USB 3.2 rev 1.1 (03/06/2022), USB Power Delivery Specification (20/04/2023), USB Type-C Connector Specification Release 2.2 (18/10/2022), USB Type-C and Power Delivery Source Power Requirements (24/05/2021), USB Type-C Bridge Specification (23/10/2018), USB Type-C Locking Connector Specification (09/03/2016), USB4 Specification (28/10/2022) and other existing, developing, or future interface technologies. It is to be noted that aspects may be implemented in accordance with any version of the listed specifications other than the listed ones for which publication dates are provided.

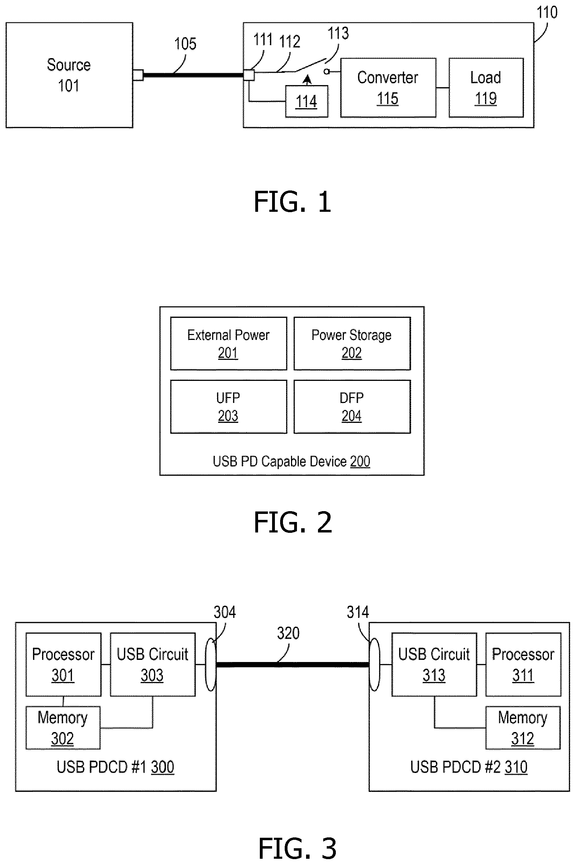

FIG. 1 depicts an exemplary generic programmable power supply system, which may also be applicable to apparatus or circuits configured to operate in accordance with a USB technology to exchange electrical supply. A source device, depicted as source 101, is a device that is configured to provide electrical supply from its output. The power of the provided electrical supply may be variable. The source 101 may provide variable electrical supply by varying the supply voltage and/or the supply current. The variable electrical supply may be a DC supply. In some examples, the source 101 may be connectable (i.e. couplable) to an external electrical power source (e.g. AC source, such as wall outlet) and convert received electrical supply (e.g. AC power) into the variable electrical supply. In some examples, the source 101 may include a power storage (e.g. a battery) and the source may provide the variable electrical supply based on electrical power stored in the power storage. In some examples, the source 101 (e.g. a hub device) may receive electrical power from another port of the source 101.

The electrical supply provided by the source 101 may be programmable. The source 101 may provide variable electrical supply over an interface 105 to a sink device 110. In some examples, the source 101 may be an external entity to the sink device 110. In USB context, the source 101 may exemplarily be a USB adapter configured to provide variable electrical supply in accordance with a USB specification (e.g. USB protocol), and/or a USB host. In some examples, the source 101 may be circuitry couplable to a converter 115 of the sink device over the interface. In some examples, the source 101 may be a programmable power supply unit of the sink device 110, such as a voltage regulator, a buck converter, a boost converter, a linear voltage regulator, a switching voltage regulator, a low-dropout regulator, etc.

The sink device 110 may include an input port 111 connectable to the source 101 via the interface 105. The input port 111 may be configured to receive the electrical supply provided via the interface 105 by the source 101. The input port 111 may further be configured to provide the received electrical supply into a supply line 112 (e.g. a connection which may be referred to as a supply connection, a power line, a sink line, etc.). The sink device 110 may further include a voltage regulator, depicted as converter 115 for a DC-to-DC conversion of the provided electrical supply, to regulate the electrical supply received from the supply line 112 to supply the load 119 (i.e. load circuitry) of the sink device 110. The load 119 may be any component, module, unit, or a portion of the sink device 110 that is electrically supplied from output of the converter 115. In some aspects, the load 119 may also be a battery configured to provide electrical supply power to the sink device 110. It is further to be noted that the converter 115 may also be a load of the sink device 110, but illustrated here explicitly for the purpose of describing the operation.

For illustrative purposes, the load 119 may include at least one of one or more processors, one or more memory devices, communication circuits, sensors, display devices, a further voltage regulator, input and/or output devices which may be integrated into the sink device 110 or which may be connected to the sink device 110 via an interface, battery charger circuits, an external device that is connected to the sink device 110, etc.

In the context of USB technology, the source 101 may be USB Power Delivery (PD) capable device (e.g. a PD source), such as a USB adapter or a USB host that is configured to supply power in accordance with a USB PD specification. Accordingly, the source 101 may include a USB port and the input port 111 may be a USB port. The interface 105 may be a USB interface, e.g. a USB Type-C cable/connector. In this context, the source 101 is a USB source providing power to a port, and the sink device 105 may be a USB sink consuming the provided power. It is to be noted that a USB device may operate as a sink device or a source device in different modes as a USB dual-role power device in accordance with the role assigned for the electronic device and/or for a particular port.

The sink device 110 may be any electronic device that may consume a variable electrical supply power received from a source. In some examples, the sink device 110 may be any one of a wireless station, any types of user devices which may include a suitable device including a processor, that may include, a mobile device or a non-mobile device, a user equipment (UE), a computing device, such as a personal computer (PC), a desktop computer, a mobile computer, a laptop computer, a notebook computer, a tablet computer, a server, a handheld computing device, a wearable device, such as a smart bracelet, a smart watch, smart glasses, a smart ring, etc., an internet of things (IoT) device, a sensor, a mobile phone, a cellular telephone, any types of wireless accessories, such as a headphone, a headset, a microphone, a speaker, a domotics (smart home) device, a docking station, a medical device, an endoscope, a surgical robot, a hearing aid, a cochlear implant device or a system, a Bluetooth medical device, an audio communication device, a headset, a headphone, an earphone, an earbud, a true wireless earphone, a wireless speaker, etc.

In order to control PD from the source 101, the sink device 110 may include a controller 114. The controller 114 may include any type of circuitry to control the PD. In some aspects, the sink device 110 may further include a switch 113 (i.e. a switch device, a circuit or a component to perform switching). The switch 113 may be configured to establish a connection of the input port 111 to an input of the converter 115 over the supply line 112. When the switch 113 is disconnected (disconnect state), the electrical supply received from the input port 111 is not provided to the input of the converter 115. When the switch 113 is connected (connect state), the electrical supply received from the input port 111 is provided to the input of the converter 115. The controller 114 may control the operation of the switch 113 to cause supply line to conduct the electrical supply received from the input port 111 to the converter 115. In other words, the switch 113 may couple, in a conducting state, the supply line 112 to the input of the converter 115, and the switch 113 may decouple, in a non-conducting state, the supply line 112 from the input of the converter 115. The switch 113 may be any type of a controllable switch, such as a load switch, or a transistor.

In some aspects, the controller 114 may further communicate with the source 101 for determination of the amount of electrical power supplied by the source 101. The communication may take place via the interface 105, but it may also take place via another interface that is configured to exchange information for the determination, which is not shown. In the context of USB, the controller 114 may be a PD controller . The source 101 and the sink device 110 may be configured to negotiate for more or less current and/or higher or lower voltages over the interface 105. The controller 114 may include a memory to store a determined voltage level, which may be a voltage level that has been negotiated with the source 101 in a negotiation operation. In some examples, the controller 114 may include an embedded controller. The embedded controller may be configured to implement the PD controller, including PD negotiation with the source 101.

In accordance with some aspects, the sink device 110 may further include a battery configured to provide electrical supply and battery circuitry configured to control the operation of power delivery with respect to the battery. Exemplarily, the sink device 110 may further include a further switch. The further switch may provide the output of the converter 115, i.e. converted electrical power, to the battery or to the load 119 selectively. The further switch may be configured to selectively provide the received electrical supply to the battery and/or to the load 119. In some aspects, the switch 113 may be configured to cause the switching to selectively provide the received electrical supply to the battery and/or to the load 119.

FIG. 2 shows an illustration with respect to logical structure of USB PD capable devices. In accordance with present USB PD Specification, an electronic including a USB port that supports the USB PD may be referred to as a USB PD capable device (USB PDCD) 200. A USB PDCD 200 may be defined with respect to the logical structure exemplarily provided herein for the aspects of PD. It is to be considered that one or more logical units depicted here may be optional for the USB PDCD 200, as described herein.

A USB PDCD 200 may include components to implement external power unit 201, the components may be configured to receive electrical power externally from an external power source. A USB PDCD 200 may include components to implement power storage unit 202, the components may be configured to store power. A USB PDCD 200 may include components to implement an upstream facing port (UFP) 203. A USB PDCD 200 may include components to implement a downstream facing port (DFP) 204. A USB PDCD 200 may, via the UFP 203 and/or the DFP 204 transfer power or communicate with another USB product (e.g. a further USB PDCD) over a USB connector/cable. The UFP 203 and the DFP 204 A USB PDCD 200 may operate as a sink (e.g. sink device) or a source (e.g. source device), which may be the designated role for the USB PDCD 200 with the design/manufacturing of the USB PDCD 200, or which may be a role assumed during its operation of the USB PDCD 200 if the USB PDCD 200 is a dual role device (DRD (i.e. Dual-Role Power Device)). It is further to be noted that the USB PDCD 200 may operate as a sink or as a source in a port-based structure. In other words, the USB PDCD 200 may operate for one USB port as a sink and for another USB port as a source at the same time.

Illustratively, a USB PDCD 200 which is a USB Host, includes the external power 201 and the DFP 204, and it may optionally include the power storage 202. The USB Host uses the DFP 204 to source power (i.e. provide electrical supply power). Optionally, if the USB Host is a DRD, the USB Host may use the DFP 204 to sink power (i.e. consume received electrical supply power). The USB Host may optionally use the DFP 204 to communicate with another USB product. The communication may include a communication for PD operation (i.e. SOP communication, by exchanging power delivery packets beginning with SOP). The DFP 204 may be for multiple power inputs/outputs. When the USB Host sources power, the source may be the external power unit 201, the power storage unit 202, or may be derived from the DFP 204. When the USB Host sinks power, the USB Host may sink the power storage unit 202, sink to power internal functions of the USB Host, or sink to power a further USB via the DFP 204.

Alternatively, a USB PDCD 200 may be a USB charger (i.e. USB adapter). The USB charger includes the external power 201 and the DFP 204, and it may optionally include the power storage 202. The USB Charger uses the DFP 204 to source power (i.e. provide electrical supply power). Optionally, if the USB Charger is a DRD, the USB Charger may use the DFP 204 to sink power (i.e. consume received electrical supply power). The USB Charger may optionally use the DFP 204 to communicate with another USB product. The communication may include a communication for PD operation (i.e. SOP communication, by exchanging power delivery packets beginning with SOP). The DFP 204 may be for multiple power outputs. When the USB Charger sources power, the source may be the external power unit 201, the power storage unit 202. When the USB Host Charger power, the USB Charger may sink the power storage unit 202, sink to power internal functions of the USB Charger, or sink to power a further USB via the DFP 204.

Alternatively, a USB PDCD 200 may be a USB Device. The USB Device includes the UFP 203. Optionally, the USB Device may include the external power 201 and the power storage 202. The USB Device uses the UFP 203 to sink power (i.e. consume received electrical supply power). Optionally, if the USB Device is a DRD, the USB Device may use the UFP 203 to source power (i.e. provide electrical supply power). The USB Device may optionally use the UFP 203 to communicate with another USB product. The communication may include a communication for PD operation (i.e. SOP communication, by exchanging power delivery packets beginning with SOP). The UFP 203 may be for multiple power inputs/outputs. When the USB Device sources power, the source may be the external power unit 201, the power storage unit 202, or the UFP 203. When the USB Device sinks power, the USB Device may sink the power storage unit 202, sink to power internal functions of the USB Charger, or sink to power a further USB via the UFP 204. It is to be noted that the term "USB Device" is used parallel to the definition provided in corresponding USB specifications, and is different from a generic USB device in this context.

Alternatively, a USB PDCD 200 may be a USB hub. The USB hub includes the UFP 203 and the DFP 204. Optionally, the USB hub may include the external power 201 and the power storage 202. The USB hub uses the UFP 203 to sink power (i.e. consume received electrical supply power). Optionally, if the USB hub is a DRD, the USB hub may use the UFP 203 to source power (i.e. provide electrical supply power). The USB hub uses the DFP 204 to source power (i.e. provide electrical supply power). Optionally, if the USB hub is a DRD, the USB hub may use the DFP 204 to sink power (i.e. consume received electrical supply power). The USB Device may optionally use the UFP 203 or the DFP 204 to communicate with another USB product. The communication may include a communication for PD operation (i.e. SOP communication, by exchanging power delivery packets beginning with SOP). The DFP 204 may be for multiple power inputs/outputs. When the USB hub sources power, the source may be the external power unit 201, the power storage unit 202, or the UFP 203. When the USB Device sinks power, the USB Device may sink the power storage unit 202, sink to power internal functions of the USB Charger, or sink to power a further USB via the DFP 204.

FIG. 3 shows an exemplary illustration of two USB PDCDs in accordance with various aspects of this disclosure. Each USB PDCD may be a USB PDCD described in FIG. 2 in line with the aspects provided in FIG. 1. A first USB PDCD 300 may include a processor 301, a memory 302, a USB circuit 303, and a USB port 304. A second USB PDCD 310 may include a processor 311, a memory 312, a USB circuit 313, and a USB port 314.

USB PDCDs 300, 310 may include respective processors 301, 311, and memory devices 302, 312 as load devices. USB PDCDs 300, 310 may include further components, modules, units, etc. respectively, other than respective processors 301, 311, and memory devices 302, 312, as load devices. Further components may include further processors and/or memory devices. The first USB PDCD 300 and the second USB PDCD 310 may be connectable (and connected as illustrated) via a USB cable 320 from their USB ports 304, 314. The USB cable 320 is configured to transfer a USB voltage provided by the first USB PDCD 300 to the second USB PDCD 310. The USB voltage may be referred to as VBUS (i.e. the bus voltage). It is to be noted that the first USB PDCD 300 and the second USB PDCD 310 may be referred to as "port partners". Accordingly, the first USB PDCD 300 (source) may be considered as the port partner of the second USB PDCD 310 (sink), and vice versa.

The processors 301, 311 may include one or more processors designated for various operations of respective USB PDCDs 300, 310 depending on their functions. In various examples, each processor 301, 311 may include a central processing unit, a graphics processing unit, a hardware acceleration unit (e.g. one or more dedicated hardware accelerator circuits (e.g., ASICs, FPGAs, and other hardware)), a neuromorphic chip, and/or a hardware controller (e.g. embedded controller). Each processor 301, 311 may be implemented in one processing unit, e.g. a system on chip (SOC), or a processor. In some examples, each processor 301, 311 may include a respective embedded controller. Each embedded controller may be configured to implement the PD controller, including PD negotiation with corresponding port partner. In accordance with various examples, each processor 301, 311 may be configured to control USB-related operations of the respective device (e.g. as a USB PD controller), some of which are described here. Each processor 301, 311 may be configured to implement USB PD Communications stack (e.g. as described in USB PD specifications). Each processor 301, 311 may be configured to perform further functions for operation of the respective USB PDCDs. Each memory 302, 312 may store various types of information required for the respective processor 301, 311 to operate in accordance with various aspects of this disclosure.

USB circuits 303, 313 may include components and circuits to implement various types of USB operations including the PD operation in accordance with the control of the respective processors 301, 311. In accordance with various aspects provided herein, each USB circuit 303, 313 may include at least one of a voltage regulator (e.g. the converter 115), a switch (the switch 113), an embedded hardware controller to control the switch, a further switch to source/sink the battery, etc.

The USB ports 304, 314 may be USB PD ports. A USB PD port may operate as a source port (port supplying electrical supply power) or a sink port (port consuming electrical supply power). For a PD connection one USB PD port is a source port and one USB PD port is a sink port. If connected USB PDCDs support DRD operation and if connected USB PD ports are DRD ports, each USB PDCD may operate as an assigned sink or source role via its respective DRD port. Similarly, UFP and DFP roles of each such USB PDCD may be swapped depending on the use case. For brevity of the disclosure, these aspects are not discussed herein, and the first USB PDCD 300 is considered as the source and the second PDCD 310 is considered as the sink device.

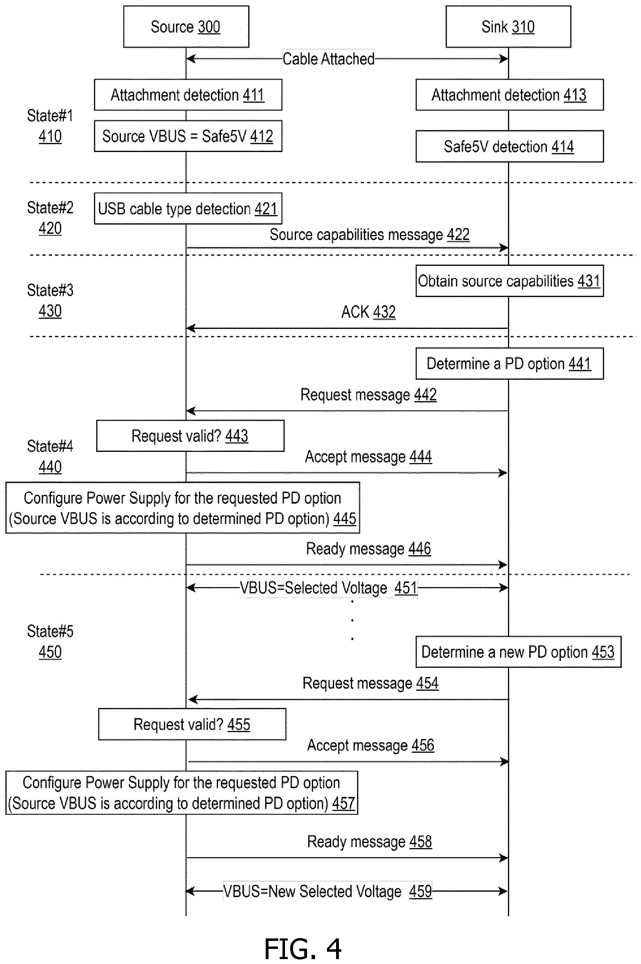

FIG. 4 shows an illustration of a negotiation operation for PD operation (i.e. establishment of a PD connection). USB PD operation 400 includes various states and operations of a USB PDCD to establish a PD connection between the sink and the source for the USB PD operation. In a first state that is to be referred to as the attach state, the first USB PDCD 300 (the source), via the processor 301 and the USB circuit 303, may detect 411 an attachment of the second USB PDCD 310 (the sink) to the USB port 304 over the USB cable 320. In response to the detection of the attachment, the processor 301 may control the USB circuit 303 to set VBUS to a predefined safe voltage (i.e. 5V), and the USB circuit 303 may cause the first USB PDCD 300 to supply 412 VBUS voltage from the USB port 304 to the USB port 314 of the second USB PDCD 310 over the USB cable 320.

In the attach state, the second USB PDCD 310, via the processor 311 and the USB circuit 313, may detect 413 an attachment of the first USB PDCD 300 (the source) to the USB port 314 over the USB cable 320. Furthermore, the second USB PDCD 310, via the processor 311 and the USB circuit 313, may detect 414 a presence of the predefined safe voltage (VBUS=5V). In response to the detection of the predefined safe voltage, the processor 311 may wait for a source capabilities message to be received from the first USB PDCD 300.

Source capabilities message (e.g. Source_Capabilities message, or EPR_Source_Capabilities message) may include information representative of capabilities of the source for PD operation, including a specific source capability such as a battery (e.g. 2.8V-4.1V) or a fixed power supply (e.g. 12V) at a maximum allowable current, a PD mode, etc. The source capabilities message may accordingly include information representative of a voltage value that the first USB PDCD 300 is able to supply. The source capabilities message may include multiple power data objects each representative of a power delivery option (PDO, or augmented PDO (APDO)) that the first USB PDCD 300 is capable of. In a second state after the attach state (i.e. before PD connection state) in which there is neither an established PD connection nor an established PD contract, the processor 301 and the USB circuit 303 may detect 421 the type of the USB cable 320.

The processor 301 of the first USB PDCD 300 may generate the source capabilities message based on its capabilities, and optionally based on the detected type of the USB cable 320, and send 422 the source capabilities message to the second USB PDCD 310 via the USB cable 320. In a third state after the second state (i.e. establishing PD connection), the second USB PDCD 310 may receive from the USB port 314 and decode the source capabilities message with the processor 311 to obtain 431 the capabilities of the first USB PDCD 300. The processor 301 may generate an acknowledgement message (i.e. GoodCRC message) and cause the second USB PDCD 310 to send 432 the acknowledgment message to the first USB PDCD 300.

In a fourth state after the third state (i.e. establishing PD contract), the processor 311 of the second USB PDCD 310 may determine 441 a power delivery option (e.g. a voltage value) based on capabilities of the second USB PDCD 310 and the received source capabilities message. The determination may include selecting one power delivery option from multiple power delivery options included in the received source capabilities message. The processor 311 may generate a request message (e.g. Request message, an EPR_Request message) representative of the selected power delivery option (e.g. a power data option from multiple power data options), and cause the USB PDCD 310 to send 442 the request message to the first USB PDCD 300. The first USB PDCD 300 may respond 444 to received request message with an accept message. The processor 301 may further generate a ready message (i.e. a ready signal) when the first USB PDCD 300 is ready to source power at the negotiated level (i.e. according to the determination of the second USB PDCD 310, e.g. a determined voltage value) to be sent 446 to the second USB PDCD 310. The ready message (e.g. PS_RDY message) may be representative of the power supply has reached 445 the desired operating condition indicated by the request message. This is to be considered as the first USB PDCD 300 and the second USB PDCD 310 are in an explicit USB PD contract.

In a fifth state after the fourth state (i.e. during established PD connection with an established PD contract), the first USB PDCD 300 may source 451 power to the second USB PDCD 310 from its USB port 314 by providing the electrical supply power at the negotiated level. Accordingly, the processor 301 may have controlled the USB circuit 303 to set VBUS to the negotiated voltage level and the USB circuit 303 may cause the first USB PDCD 300 to supply VBUS voltage with a level that was selected by the second USB PDCD 310 from the USB port 304 to the USB port 314 of the second USB PDCD 310 over the USB cable 320.

In various USB specifications (e.g. the USB Type-C specification), when a source is attached to a sink device, the sink device is not allowed to sink from USB Type-C source until the voltage and current negotiation is finalized (i.e. until the state in which there is an established PD connection and an established PD contract).

A PD contract may be an agreement on a power level and a direction of power delivery reached between two connected USB PDCDs. An established PD contract may be a result of explicit negotiation between the connected USB PDCDs. Alternatively, an established PD contract may be an implicit power level defined by the current state. An established PD contract may only be changed in result of another negotiation (e.g. a renegotiation), a role swap, a hard reset, or a failure of the source.

In the fifth state, the second USB PDCD 310 may further send a new request message to renegotiate the power sourced by the first USB PDCD 300. The processor 311 may determine 453 that the current voltage level that is at a first voltage level (e.g. safe 5V) is to be changed to a second voltage level (e.g. based on a received instruction, based on needs of the second USB PDCD 310, etc.) resulting in a voltage transition. Accordingly, the processor 311 may select another power delivery option from the multiple power delivery options offered by the first USB PDCD 300 with the received source capabilities message.

The processor 311 may generate another request message representative of the selected another power delivery option and the second USB PDCD 310 send 454 the generated message to the first USB PDCD 300 via the USB cable 320. The first USB PDCD 300 may respond to received request message with an accept message 456. The processor 301 may further generate a ready message (i.e. a ready signal) when the first USB PDCD 300 is ready to source power at the renegotiated level 457 (i.e. according to the determination of the second USB PDCD 310, e.g. a further determined voltage value). The ready message 458 (e.g. PS_RDY message) may be representative of the power supply has reached the desired operating condition indicated by the request message. Accordingly, a transition occurs at the VBUS voltage which may start at the previously supplied VBUS voltage at the first voltage level and end at the VBUS voltage after renegotiation at the second voltage level 459.

The first USB PDCD 300 may cause VBUS voltage transitions by using various methods in accordance with the USB PD specification. For example, the processor 301 may cause voltage transitions in accordance with fixed supply voltage transitions, and/or in accordance with standard power range (SPR) programmable power supply (PPS) voltage transitions, and/or extended power range (EPR) adjustable voltage supply (AVS) voltage transitions, and/or hard reset transitions. In SPR PPS voltage transitions, the processor 301 may cause change at output voltage and output current in predetermined small increments within its range. In EPR AVS voltage transitions, the processor 301 may cause the output voltage to be adjusted within its range.

There are various requests that may cause a transition at VBUS. Illustratively, the processor 311 may determine to increase the current or the voltage supplied by the first USB PDCD 300. Some determinations may include changes at both the supply current and the supply voltage, which the changes may be at the same direction or at opposite directions. The processor 311 may determine to increase the current or the voltage for a generic transition between PDOs provided by the first USB PDCD 300, within the selected PDO, within the selected PPS APDO or within the same AVS APDO.

The processor 311 may generate another request message representative of the selected another power delivery option and the second USB PDCD 310 send 454 the generated message to the first USB PDCD 300 via the USB cable 320. The first USB PDCD 300 may respond to received request message with an accept message 456. The processor 301 may further generate a ready message (i.e. a ready signal) when the first USB PDCD 300 is ready to source power at the renegotiated level 457 (i.e. according to the determination of the second USB PDCD 310, e.g. a further determined voltage value). The ready message 458 (e.g. PS_RDY message) may be representative of the power supply has reached the desired operating condition indicated by the request message. Accordingly, a transition occurs at the VBUS voltage which may start at the previously supplied VBUS voltage at the first voltage level and end at the VBUS voltage after renegotiation at the second voltage level 459.

Illustratively for a change from one PDO to another PDO, the processor 311 may have determined to change the power delivered by the first USB PDCD 300. The processor 311 may have selected a PDO (e.g. a new PDO) based on the source capabilities message received from the first USB PDCD 300. The processor 311 may cause the second USB PDCD 310 to send a request message (e.g. a new Request) representative of the selected PDO to the first USB PDCD 300. After receiving an accept message in response to the sent request message, the processor 311 may cause the USB circuit 313 to operate in a sink standby state. Within the sink standby state, the USB circuit 313 may be configured, via the switch device, disconnect the supply line from the load. The first USB PDCD 300 may cause a change at the VBUS from a first voltage level before the received request to a second voltage level when the supply line of the second USB PDCD 310 is disconnected from the load. With the VBUS at the second voltage level, the first USB PDCD 300 may send a ready message (e.g. PS_RDY) and the processor 311 may, in response to the received ready message, cause the USB circuit 313 to operate at a state (i.e. sink state) by connecting the supply line to the load via the switch device. Accordingly, the voltage and the current (VBUS, VBUS voltage and VBUS current respectively) at the supply line may change.

During an initial negotiation only a current at a level of few milliamperes is allowed. The sink may use the supplied current to power up certain components (e.g. processor 311, USB circuit 313) and proceed with the negotiation. For this purpose, the sink device may bring a switch device (e.g. the switch 113), which is configured to couple or decouple the supply line to the converter (e.g. the converter 115), to a disconnect position or maintain the disconnect position. In other words, the converter 115 and the load (e.g. the load 119) is disconnected from the supply line. The supply line is the electrical connection coupled to the USB port of the sink device, which the USB port is connected to the source (e.g. the supply line 112). The sink device may proceed with the negotiation procedure as described in accordance with FIG. 4 with the switch device at the disconnect position until the sink device receives a ready signal (e.g. ready message, PS_RDY message) from the source (e.g. until the fifth stage, exemplarily during at least the fourth state, and optionally at the third state, and additionally at the second stage, sometimes at the first state as described herein.

It is further to be noted that along with evolved USB specifications (e.g. USB Type-C and/or USB PD specification) one of the requirements of the designated power limit (pSnkStdby) when the voltage is ramping up or down as (2.5watt/VBUS) A. If VBUS is equal to 20V this result in a 125mA of current. For this implementation, the PD controller (e.g. the processor 311) of the sink device may cause the switch device to operate at the disconnect position to disconnect the load from the supply line during a voltage transition of the VBUS voltage (i.e. received electrical supply power at the sink device) to adhere exemplarily to pSnkStdby requirement in the USB Type-C specification. Accordingly, the PD controller may cause the load to be supplied from the stored power (e.g. battery).

With the initiation of the fifth stage at the negotiation operation, or once a negotiated voltage level is set and the source brings the VBUS voltage to the negotiated voltage level (i.e. the voltage level of the PD contract), the source may send the PS_RDY as described. The PD controller of the sink device may, in response to the received ready message representing that the source is ready to supply the negotiated power level (e.g. negotiated voltage level), signal to an embedded controller (EC) about the negotiated voltage and current. Accordingly, the EC may cause the switch device to operate in a connect position to couple the load to the supply line.

In accordance with the above-mentioned procedure with respect to the switch device, the load, and correspondingly the converter, may cause a considerable amount of current to be supplied from the supply line, when, for example, the electrical supply of the sink device is switched from the power storage (e.g. battery) to the source over the supply line. The switch devices may include transistors (e.g. MOSFET) and due to the in-rush current limit circuit, the switch device may lead to a high drain-source on-resistance (RDSon). With the high current (e.g. 5A), 30W to 50W of power may be dissipated across the switch device, potentially damaging the switch device. Various aspects are provided in this disclosure to prevent the damaging of the switch device.

Furthermore, with the evolved USB specifications (e.g. USB PD 3.1 specification), the VBUS voltage may be up to 48V and the maximum power may be up to 240W. In case a connected USB cable (e.g. the USB cable 320) is unplugged (i.e. hot-unplug) during a PD operation sinking such a high VBUS, the voltage difference between VBUS pins of the USB cable and the USB port (USB receptacle) may be above 12V, which may result in arcing on the pins of the receptacle, and thereby damaging the pins with the high electrical current. It is to be noted that the total time budged in the event of a hot-unplug is 250 microseconds.

In particular, in electronic devices supporting EPR mode, the PD controller may be configured to detect VBUS dropping beyond 5% of VBUS voltage within first 100 microseconds and may be configured to disconnect switch devices to decouple the load from the supply line, so that the voltage difference between supply pin of the input port and supply pin of the connector of the cable can be below 12V within the first 250 microseconds, however, there may be certain inaccuracies in terms of the timing and due to the dependency to the firmware, the control of the supply line (i.e. sink path) may be indeterministic.

Moreover, sensing of VBUS voltage to obtain digital voltage value via exemplarily an analog-to-digital converter may be challenging as the PD has to wait till the VBUS decreases down the vSrcValid limits enforced with the USB specifications. In accordance with various aspects provided herein, in particular via hardware-based operation including a comparator, the an input of the comparator has fixed voltage (i.e. the first voltage) reference that is set based on the power delivery option. Accordingly, the comparator may detect an hot-unplug event rapidly and may disable the load (i.e. the voltage regulator) directly, so that even if switch device does not uncouple the load, arcing requirements may be met.

It is further to be noted that although possible solutions may include using more than one switch devices to distribute the power to be dissipated, this may increase the size of the circuit and result in high cost. Furthermore, firmware dependent solutions could be implemented but such solutions may not be responsive enough to remedy above-mentioned and related problems in a reliable manner.

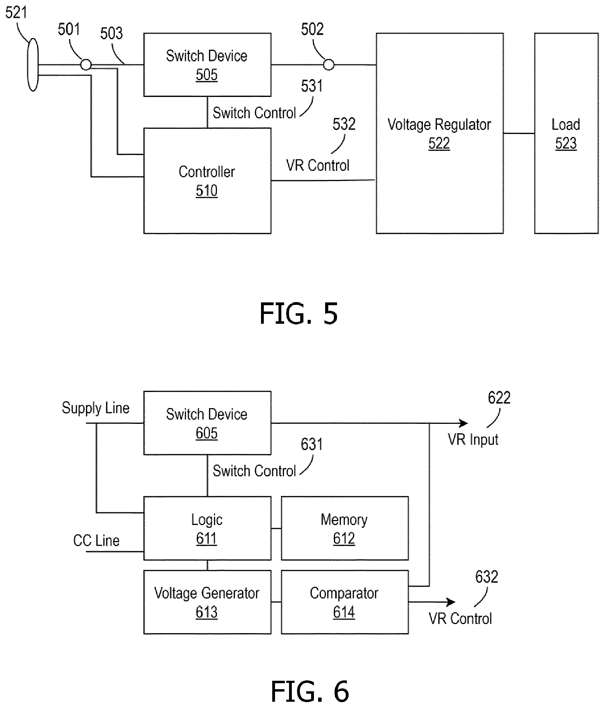

FIG. 5 illustrates an exemplary circuit in accordance with various aspects provided in this disclosure. The circuit may be a circuit for an electronic device (e.g. the sink device 110, the second USB PDCD 310). The circuit may also be referred to as circuitry. The circuit may include a first terminal 501 and a second terminal 502. The first terminal 501 may be connectable to an input port 521 (e.g. the input port of the electronic device). The input port 521 is connectable to a source via a designated interface (e.g. USB). The input port 521 may receive an electrical supply power (e.g. a supply voltage) from the source (e.g. the source 101, the first USB PDCD 300). The electrical supply power may include a DC voltage. The electrical supply power may be variable (e.g. a variable supply voltage). The source may be a programmable electrical supply power. The first terminal 501 may be connectable to the input port 521 in a manner, such that the first terminal 501 receives the sourced electrical supply power from the input port 521 (e.g. connectable to a VBUS pin).

The circuit may further include a switch device 505 (e.g. the switch). The switch device 505 may be configured to establish an electrical connection between the first terminal 501 (i.e. the input port 521) and the second terminal 502 forming a supply line 503. When the switch device 505 is at a disconnect state (e.g. a disconnect position, switch is ON), the supply line 503 does not provide received electrical supply power to the second terminal 502. When the switch device 505 is at a connect state (e.g. a connect position, or switch is OFF), the supply line 503 provides received electrical supply to the second terminal 502. The second terminal 502 is connectable to a load of the electronic device (e.g. a voltage regulator 522, load circuitry 523).

In other words, when the first terminal 501 is connected to the input port 521 and when the second terminal 502 is connected to a load (e.g. voltage regulator 522), the switch device 505 may couple (in a connect state) or decouple (in a disconnect state) the terminal of the input port 521 which provides the electrical supply power (e.g. VBUS, VBUS current) to the load via the supply line 503. The circuit may further include a controller 510 configured to control the coupling and decoupling of the switch device 505. In other words, the switch device 505 may couple, in a connect or a conducting state, the supply line 503 to the input of the voltage regulator 522, and the switch device 505 may decouple, in a non-conducting or a disconnect state, the supply line 503 from the input of the voltage regulator 522. The switch device may be any type of a controllable switch, such as a load switch, or a transistor. In some aspects, the switch device 505 may be configured to cause the switching to selectively provide the received electrical supply to the battery and/or to the load.

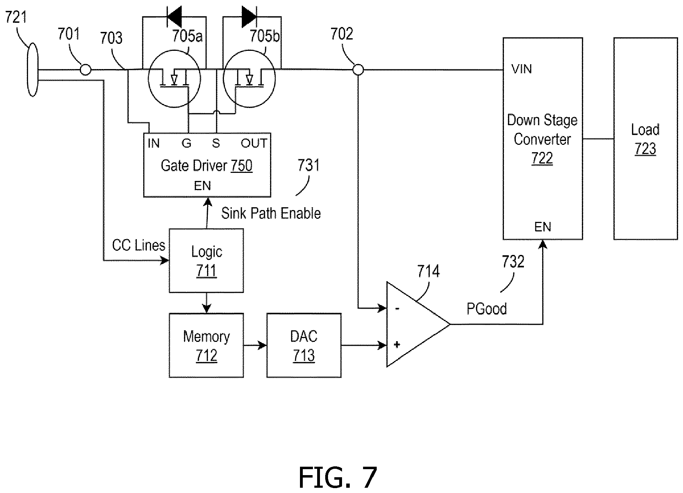

The switch device 505 may include one or more transistors used as switches. Examples are provided in this disclosure (e.g. FIG. 7) with n-type field effect transistors (FETs), but in some examples, the switch device 505 may include p-type FETs used as switches. Alternatively, other types of transistors (e.g. bipolar junction transistors (BJTs) usable as switches may also be used in the switch device 505. Using FETs may further introduce higher switching speed and higher efficiency and contribute to some aspects as they may have lower RDSon compared to other transistor types. Furthermore, the switch device 505 may be an integrated circuit (e.g. an integrated load switch).

In some examples, the controller 510 may cause the switch device 505 to operate at the disconnect state at a period of time in which there is a transition at the electrical supply power (e.g. voltage change and/or current change). The controller 510 may cause the switch device 505 to operate at the disconnect state to decouple the first terminal 501 and the second terminal 502 during a voltage transition of the electrical supply power. The controller 510 may further cause the switch device 505 to operate at the connect state to couple the first terminal 501 and the second terminal 502, so that the electrical supply power received at the first terminal 501 is provided to the second terminal 502 (i.e. to the load including illustratively voltage regulator 522 and load circuitry 523).

The controller 510 may include a set of one or more electronic components, a computer-related entity, hardware, software (e.g., in execution), and/or firmware. The controller 510 may include a circuit to provide some or all of described aspects and/or a processor (e.g. the processor 311) to provide some or all of described aspects. The processor may include one or more logics. The controller 510 may further include a memory (e.g. the memory 312). In some aspects, especially for examples in which the circuit is for a USB PDCD, the controller 510 may include a USB PD controller. Exemplarily, the controller 510 may include an embedded controller. The embedded controller may be configured to implement the PD controller, including PD negotiation with the source.

The controller 510 may be further configured to communicate with the source connected to the input port 521 to negotiate for a power option (e.g. a voltage level or a current level) for the received electrical power supply. The input port 521 may include a communication pin (e.g. configuration channel (CC) pins in USB Type-C) connected to the controller. The circuit may include communication terminals connected to the communication pin. In examples, in which the controller 510 is a USB PD controller, negotiation may include the PD negotiation as described in line with FIG. 3 and 4. Particularly, the controller 510 may determine a power option representative of a voltage level to be supplied as the electrical power supply. The controller 510 may, via a designated signaling, indicate the determined power delivery option to the source, such that the source may provide the electrical power supply according to the determined power delivery option by adjusting the sourced electrical power supply (causing a voltage transition resulting in the determined power delivery option). The power option may include, in particular, a designated voltage level.

In some examples, the controller 510 may also be connected to the supply line 503 to monitor the voltage at the supply line 503. The controller 510 may include a monitor input coupled to the first terminal 501. The controller 510 may include an analog-to-digital converter (ADC) to convert the voltage received from the monitor input. The controller may perform a calculation based on the output of the ADC and store voltage value of monitored voltage into the memory.

The controller 510 may be configured to generate a first voltage (which may be also referred to as a reference voltage). The generation of the first voltage may include a generation using a voltage source, which may be different from the electrical supply power conducted by the supply line 503. This voltage source may be a voltage source internal to the electronic device (e.g. a battery) connected to the circuit via a separate terminal. In some examples, this voltage source may be the received electrical supply power conducted by a separate supply line that is different from the supply line 503. Illustratively, the separate supply line may be connected to the first terminal 501 (i.e. between the input port 521 and the switch device 505). In some examples, the generation of the first voltage may include routing a voltage present at a circuit of the electronic device to a predefined terminal of the controller 510. The generation of the first voltage may include supplying a voltage at a designated level (e.g. a predetermined level, a predefined level).

Furthermore, the controller 510 may be configured to control the voltage regulator 522 of the electronic device. In some examples, the circuit may include the voltage regulator 522 and the controller 510 may be coupled to a control input of the voltage regulator 522. The control of the voltage regulator 522 may particularly include the activation and/or the deactivation of the voltage regulator 522. The voltage regulator 522 may be, in an active state, configured to draw a current from its input coupled to the second terminal 502 to provide a voltage output at a level that is desired by one or more load circuitry 523. It is to noted that the voltage regulator 522 may also draw a current from its input when the input is coupled to another source (e.g. power storage of the electronic device), in particular when the electronic device is configured to sink power from another source. The voltage regulator 522 may be configured to output a voltage that is based on the voltage at the input of the voltage regulator 522 (e.g. the voltage at the second terminal). The voltage regulator 522 may further include a control input (e.g. an enable input) to receive a control signal that activates (i.e. cause the voltage regulator 522 to operate in the active state) or deactivates (i.e. cause the voltage regulator 522 to operate in an inactive state). In the inactive state, the voltage regulator 522 may not draw a current to provide the output voltage. The active state may refer to a state in which the operation of the voltage regulator 522 is enabled. The inactive state may refer to a state in which the operation of the voltage regulator 522 is disabled.

The controller 510 may be configured to control the activation and/or deactivation of the voltage regulator 522 based on a comparison between the first voltage and the voltage at the second terminal 502 of the circuit. The voltage at the second terminal 502 of the circuit may be referred to as the second voltage. In some examples, the controller 510 may receive information representative of the comparison from another circuit that is configured to compare the first voltage and the second voltage. The received information may be representative of at least one of i) whether the first voltage is greater than the second voltage; ii) whether the second voltage is greater than the first voltage, iii) whether the first voltage is equal to the second voltage, iv) whether the first voltage is not equal to the second voltage, whether there is a predefined difference between the first voltage and the second voltage, whether the difference of voltage levels between the first voltage and the second voltage is at a predefined or predetermined voltage value.

In some examples, the first voltage may be considered as a reference voltage designated to be a threshold in the comparison. Based on the arrangement of the operation, the controller 510 may, via the comparison, compare the second voltage with the threshold being the first voltage and provide a first control signal to activate the voltage regulator 522 when the second voltage is above the threshold. Similarly, the controller 510 may, via the comparison, compare the second voltage with the threshold being the first voltage and provide a second control signal to deactivate the voltage regulator 522 when the second voltage is below the threshold

In accordance with various aspects provided herein, during a voltage transition of the voltage at the supply line 503, the controller 510 may cause the switch device 505 to operate at the disconnect state, decoupling the second terminal 502 from the first terminal 501. After the voltage transition, exemplarily by receiving a ready message from the input port 521, the controller 510 may cause the switch device 505 to operate at the connect state, coupling the second terminal 502 to the first terminal 501. At this stage and depending on the voltage at the supply line 503 (i.e. received electrical supply power), voltage regulator 522 may demand a current causing a considerable amount of power to be dissipated at the switch device 505, which may damage the switch device 505.

To prevent the above-mentioned damage, the controller 510 may be configured to deactivate the voltage regulator 522 before causing the switch device 505 to operate at the connect state. Illustratively, when the received electrical supply power is at a first level and being supplied according to regular operation of the electronic device, the controller 510 may cause the voltage regulator 522 to operate at the active state, so that the voltage regulator 522 provides an output voltage to the load circuitry 523 based on the received electrical supply power at the first level. After determining a second level at which the electrical supply power is to be supplied by the source, the controller 510 may cause the voltage regulator 522 to operate at the inactive state, so that the voltage regulator 522 does not draw any current from the second terminal 502.

For example, the controller 510 may cause the voltage regulator 522 to operate at the inactive state in response to a message received from the source. The controller 510 may cause the voltage regulator 522 to operate at the inactive state after causing switch device 505 to operate at the disconnect state. In some examples, the controller 510 may cause the voltage regulator 522 to operate at the inactive state substantially at the same time in which the controller 510 causes the switch device 505 to operate at the disconnect state. In some examples, the controller 510 may be configured to cause the switch device 505 to operate at the connect state in response to causing the voltage regulator 522 to operate at the inactive state.

Accordingly, in the moment that the controller 510 causes the switch device 505 to operate in the connect state, coupling the first terminal 501 to the second terminal 502, the voltage regulator 522 is at the inactive state. The controller 510 may, based on the comparison between the first voltage and the second voltage, cause the voltage regulator 522 to operate at the active state when the controller 510 determines that the voltage difference between the first terminal and the second terminal (e.g. between a first end of the switch device 505 coupled to the first terminal 501 and a second end of the switch device 505 coupled to the second terminal 502) is below a predefined voltage level. The predefined voltage level may be 0V, or n% of the voltage determined by the controller 510 for the negotiation (i.e. determined power delivery option), where n is an integer between 0 and 70. By the controller 510 controlling the voltage regulator 522, the controller 510 may activate the voltage regulator 522 when the voltage between the first terminal 501 and the second terminal 502 is safe for operation to prevent the damage of the switch device 505.

In accordance with various aspects provided herein, when the power delivered via the supply line 503 to the voltage regulator 522 is stable, or when the controller 510 activates the voltage regulator 522 as described above, the voltage regulator 522 may operate in the active state and the input of the voltage regulator 522 is coupled to the supply line (e.g. the second terminal 502). At this stage, if the connecting component (e.g. cable) at the input port 521 is removed (i.e. hot-unplug) the voltage at the supply line and the drawn current may cause arcing between the input port 521 and the cable.

To prevent the above-mentioned arcing, the controller 510 may be configured to deactivate the voltage regulator 522 operating at the active state based on a detection of a voltage difference between the first terminal 501 and the second terminal 502. Illustratively, when the received electrical supply power is at a first level and being supplied according to regular operation of the electronic device, the controller 510 may cause the voltage regulator 522 to operate at the active state, so that the voltage regulator 522 provides an output voltage to the load circuitry 523 based on the received electrical supply power at the first level. When the cable is removed, the controller 510 may cause the voltage regulator 522 to operate at the inactive state, so that the voltage regulator 522 does not draw any current from the second terminal 502.

For example, the controller 510 may cause the voltage regulator 522 to operate at the inactive state in response to a determination based on the first voltage and the second voltage. The controller 510 may further cause the switch device 505 to operate at the disconnect state in response to the determination. Accordingly, in the moment that the cable supplying the electrical supply power is removed from the input port 521, the second voltage decreases. In the example that the first voltage is a voltage that is generated based on the determined power delivery option for the negotiation operation, the controller 510 may, based on the comparison between the first voltage and the second voltage, cause the voltage regulator 522 to operate at the inactive state when the controller 510 determines that the voltage difference between the first terminal and the second terminal (e.g. between a first end of the switch device 505 coupled to the first terminal 501 and a second end of the switch device 505 coupled to the second terminal 502) is above a predefined voltage level.

The predefined voltage level may be 0V, or n% of the voltage determined by the controller 510 for the negotiation (i.e. determined power delivery option), where n is an integer between 0 and 70. In some examples, the predefined voltage level for prevention of arcing and the predefined voltage level described for preventing switch device damage may be the same voltage level. In some examples, they may be different voltage levels. By the controller 510 controlling the voltage regulator 522, the controller 510 may deactivate the voltage regulator 522 when the voltage between the first terminal 501 and the second terminal 502 is not safe for operation to prevent the arcing.

In accordance with various aspects, the controller 510 may provide a control signal representative of a state to which the voltage regulator 522 is to operate, namely an active state or an inactive state. The voltage regulator 522 may operate in the active state when the control signal provided from the controller 510 indicates the active state. The voltage regulator 522 may operate in the inactive state when the control signal provided by the controller 510 indicates the inactive state. The operation of the controller 510 may be provided by a logic including hardware and software components.

In accordance with various aspects provided herein, the controller 510 may include one or more hardware logics. Each hardware logic may be configured to provide its function to implement the above-mentioned operation. In some examples, the controller 510 may include one or more hardware logics and one or more logics including software components. The one or more hardware logics may include, in particular, a comparison logic to compare the first voltage and the second voltage. The one or more hardware logics may further include a voltage generator, such as a digital-to-analog converter (DAC). With an implementation including a comparison logic and a voltage generation logic independent from other software-dependent operations (i.e. firmware) of the controller 510 (e.g. PD controller, PD communication stack, etc.), the above-mentioned control of the voltage regulator 522, that is dependent on the first voltage and the second voltage, may be provided in real-time, potentially at microseconds level.

FIG. 6 shows an exemplary illustration of a switch device and a controller in accordance with various aspects provided herein. The aspects described herein are provided in accordance with aspects provided for the circuitry described in FIG. 5. The switch device 605 (e.g. the switch device 505) may be provided on a supply line (the supply line 503) coupling (and decoupling) a voltage supply pin of an input port (e.g. the input port 521) to an input 622 of a voltage regulator (e.g. the voltage regulator 522).

Aspects of a controller (e.g. the controller 510) are provided in a detailed manner. In this example, the controller may include a power delivery control logic that is referred to as logic 611, a memory 612 coupled to the logic 611, a voltage regulator 613, and a comparator 614 coupled to the voltage regulator. The comparator is further coupled to an end (e.g. the second terminal 502) of the switch device 605 coupled to the input of the voltage regulator 622. The logic 611 may further be couplable, and coupled to, one or more communication pins of the input port to communicate with the source, via a CC line. The logic 611 may exemplarily be a USB PD controller configured to communicate with the source and perform PD operations in accordance with the USB PD specification, including the negotiation operation.

The logic 611 may control the coupling and the decoupling of the switch device via a switch control signal 631. As described in this disclosure, the logic 611 may communicate with the source coupled to input port to control the power (voltage and/or current) provided by the source to the supply line via the input port via a negotiation operation. The logic 611 may determine a power option based on capabilities of the source, encode a message representative of the determined power delivery option to the source, and the source may provide electrical supply power based on the determined power delivery option to the supply line.

In some examples, the logic 611 may also be connected to the supply line to monitor the voltage at the supply line. The logic 611 may include a monitor input coupled to the supply line. The logic 611 may include an analog-to-digital converter (ADC) to convert the voltage received from the monitor input and the logic 611 may perform predefined calculations based on the output of the ADC and store voltage value of monitored voltage into the memory 612.

Once the logic 611 has determined the power option, the logic 611 may store information representative of the determined power delivery option into the memory 612. Exemplarily, the information may include a current level or a voltage level value. Aspects are described here for an example of the voltage level, but the skilled person may also use current level approach in the light of this disclosure. The logic 611 may store the information at any instance of time between the determination of the power opinion and receiving a ready message from the source. In accordance with aspects provided in FIG. 4, exemplarily, the logic 611 may store the information in response to any one of encoding or sending the request message 442, receiving or decoding the accept message 444, in particular any time before receiving or decoding the request message for aspects described for prevention of the damage. For aspects described for prevention of the arcing, the logic 611 may store the information any time before the hot-unplug.

Once the power to be provided to the supply is determined, the logic 611 may use the determined power delivery option as a basis to generate a first voltage for the comparison. The determined power delivery option stored in the memory 612 may include (or may correspond) to a voltage level value. The logic 611 may control the voltage generator 613 to generate a DC voltage at a level that is based on the voltage level value of the determined power delivery option. The voltage generator 613 may include any type of voltage generation means that may generate DC voltage. Exemplarily, the voltage generator 613 may include a DAC, and the logic 611 may provide digital information representative of the determined voltage level corresponding to the determined power delivery option. Exemplarily, the voltage level of the first voltage is at the voltage level corresponding to the determined power delivery option or smaller, which the difference may be defined with a voltage gap.

Exemplarily, assuming that the determined power delivery option corresponds to a VBUS voltage of 48V, the first voltage may be generated with 45V, with a 3V voltage gap. The provided voltage gap may help the circuit to have the voltage regulator in the active state before the VBUS is at 48V. Furthermore, the voltage gap may further set the threshold for arcing prevention. The voltage gap may further prevent false switching in case of fluctuation at the electrical supply power provided by the source.

In some examples, the logic 611 may control the voltage generator 613 to generate a DC voltage at a level that is based on the monitored voltage level stored in the memory 612. In such an example, the first voltage may be a voltage that is generated based on the monitored voltage level from the supply line. The logic 611 may use the same operation that is disclosed for the example of the second voltage being based on the determined power delivery option. Accordingly, the reference provided with the first voltage may be based on a voltage at the supply line before a time period and the comparator 614 may compare the second voltage with the voltage at the supply line that has been monitored before a period of time.

The comparator 614 may be coupled to output of the voltage generator 613 to receive the first voltage from an input. The comparator 614 may further be coupled to the input 622 of the voltage regulator to receive the second voltage from another input. The comparator 614 may be configured to provide an output based on a comparison between the first voltage and the second voltage. The output 632 of the comparator 614 may include the control signal to activate or deactivate the voltage regulator. Exemplarily, if the first input (e.g. "non-inverting" or "+" input) is greater than the second input (e.g. "inverting" or "-" input), then the output is high. In other words, if the inverting input is greater, the output is low.

It is to be considered that the specific details of the comparison, such as threshold voltage and output levels, can be adjusted based on the needs of the difference detection for prevention of switch device damage and prevention of arcing. Exemplarily, the threshold voltage (i.e. trip point or reference voltage), determines the point at which the comparator 614 switches its output state. It may be set via a voltage divider network or an external reference voltage or alternatively with the voltage gap introduced in one of the voltages (e.g. the voltage gap). When the voltage on the non-inverting input exceeds the threshold voltage, the output may transition from low to high, or vice versa.

Furthermore, in some examples the output of the comparator 614 is the control signal that may activate or deactivate the voltage regulator. The output levels of the comparator are binary, representing the result of the comparison. The output can be either high (e.g. at the positive supply voltage) or low (e.g. typically at ground potential). Depending on the character of the voltage regulator, the output levels may be set accordingly to cause the voltage regulator to operate in the inactive state when the voltage at the input of the voltage regulator is less than the determined voltage level with a difference greater than a predefined voltage value (i.e. the determined voltage level is more than the voltage at the input of the voltage regulator + a predefined voltage value). Furthermore, the output levels may be set to cause the voltage regulator to operate in the active state when the voltage level is at the input of the voltage regulator is greater than the determined voltage level minus a predefined voltage level (i.e. the determined voltage level is less than the voltage level at the input of the voltage regulator + predefined voltage value).

It is to be noted that the generated voltage (e.g. the first voltage) is to be used in the above-mentioned comparison with a second voltage to control the voltage regulator for the purpose of measuring a difference of the second voltage that is the voltage being supplied to the input of the voltage regulator than the first voltage that is the voltage to be supplied by the source. In the example of USB PDCDs, that is the difference of the voltage at the second terminal than the voltage of the contract, exemplarily the negotiated voltage. Accordingly, the first voltage may include a DC voltage of which the voltage level is based on the determined power delivery option stored in the memory, and the second voltage may include a DC voltage taken from the input of the voltage regulator, which may not necessarily be the voltage between the input of the voltage regulator and the ground. In some examples, the voltage between the input of the voltage regulator may be divided with a ratio R, and accordingly the first voltage may be a generated voltage at a voltage level corresponding to the determined power delivery option divided by R.

Furthermore, the comparison of the comparator 614 is for the purpose of determining a degree of the difference between the first voltage and the second voltage, and controlling the activation and deactivation of the voltage regulator according to the degree of the difference. Therefore, the predefined or predetermined amount(s) of the difference may be set depending on the voltage level corresponding to the determined power delivery option and accordingly the voltage expected during operation at the input of the voltage regulator, but also depending on what the first voltage is and what the second voltage is, in particular for the aspects indicated in the paragraphs above.

FIG. 7 shows schematically an example of an electronic device including a circuit as described in accordance with various aspects of this disclosure. The circuit may include a first terminal 701 (e.g. the first terminal 501), a second terminal 702 (e.g. the second terminal 502), and an electrical connection between the first terminal 701 and the second terminal 702 forming a supply line 703 (e.g. the supply line 503) with a sink FET 705a and a source FET 705b to control coupling and decoupling of the first terminal 701 to the second terminal 702 when the electronic device operates in a sink mode or in a source mode respectively. Various aspects provided herein relate to the sink mode, i.e. when the electronic device is to receive electrical supply power from an input port 721 (e.g. the input port 521). The first terminal 701 is connectable to a power supply pin of the input port 721 to receive electrical power supply from a source device connected to the input port 721. The second terminal 702 is connectable to a down stage converter 722 (e.g. the voltage regulator 522) and the down stage converter 722 may be configured to provide a supply voltage to load circuitry 723 of the electronic device based on the voltage (and/or current) at its input that is connected to the second terminal 702.

Aspects are described herein for an exemplary configuration in which the electronic device is a USB PDCD, and the source is another USB PDCD connected to the input port 721 (that is USB Type-C port) via a USB Type-C cable. The received electrical supply power has a DC VBUS voltage. The logic 711 (e.g. the logic 611) may include a USB PD controller logic configured to control USB PD operation including the negotiation operation as exemplarily described in FIG. 4.

The logic 711 may accordingly be configured to enable or disable sink path via a sink path enable signal provided to a gate driver 750. To enable the sink path (i.e. the sink FET 705a is ON), the logic 711 may provide a sink path enable signal to the gate driver 750 and the gate driver 750 may provide appropriate gate signals to the sink FET 705a and the source FET 705b respectively to allow the supply line 703 to operate at the sink mode to provide received VBUS to the second terminal 702. To disable the sink path, (i.e. the sink FET 705a is OFF), the logic 711 may provide a sink path disable signal to the gate driver 750, and the gate driver 750 may provide appropriate signals to the sink FET 705a and the source FET 706b respectively to decouple the second terminal 702 from the first terminal 701.

In a PD negotiation operation, once the logic 711 determines a power option corresponding to a VBUS voltage to be received, the logic 711 may store information representative of the VBUS voltage value into the memory 712. The logic 711 may store the information before the source connected to the input port 721 transitions to the corresponding VBUS voltage. Furthermore, with the voltage transition (e.g. in response to receiving the accept message), the logic 711 may provide the sink path disable signal to decouple the first terminal 701 from the second terminal 702.

The memory 712 may include registers coupled to the DAC 713. The DAC 713 may be configured to generate a voltage output based on the information stored in the memory 712. The DAC 713 may generate a voltage output (i.e. first voltage) based on the VBUS voltage. Exemplarily, the first voltage may be a voltage at a level of the VBUS voltage. The output of the DAC may be connected to one of the inputs of the comparator 714. As indicated in various aspects described herein, the first voltage, the second voltage, and a threshold associated with the comparison of the comparator 714 may be defined with respect to each other to allow the down stage converter 722 to be activated when the voltage difference between the first voltage (i.e. negotiated voltage) and the second voltage (voltage at the second terminal) is at a designated amount.

Other input of the comparator 714 may be coupled to the second terminal 702 to receive the voltage at the second terminal. Accordingly, the comparator 714 may provide a power good (PGOOD) signal 732 to an enable input of the down stage converter 722. Exemplarily, the down stage converter 722 may be configured to operate in the active mode when the PGOOD signal 732 is high, and the down stage converter 722 may be configured to operate in the inactive md ode when the PGOOD signal 732 is low.

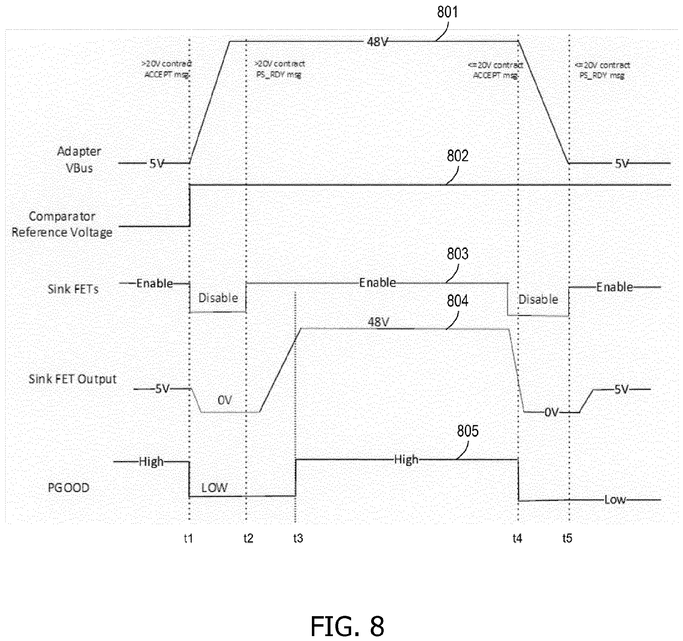

FIG. 8 shows an exemplary timing diagram including control signal described in various aspects provided in this disclosure. The timing diagram illustrates VBUS voltage 801 at the source illustrated as Adapter VBus, the first voltage 802 illustrated as comparator reference voltage, state 803 of the sink FETs 705a (i.e. when enabled the first terminal 701 is coupled to the second terminal 702, when disabled the first terminal 701 is not coupled to the second terminal 702), the second voltage 804 illustrated as Sink FET Output, and PGOOD signal 805 as the control signal 732 to activate or deactivate the down stage converter 722.

As illustrated herein, before instance of time t1 (e.g. state#1, state#2, state#3, and a portion of state#4 in FIG. 4), the source device sources VBUS=5V 801. The sink FETs 705a are enabled 803 and the second voltage 804 is also VBUS=5V. As there is no contract at this stage (i.e. the voltage corresponding to the determined power delivery option is not set), the first voltage 802 is 0V. Since the first voltage is smaller than the second voltage, the PGOOD is high 805 and the down stage converter 722 is activated.

At 11, the sink receives the accept message for a contract with a VBUS>20V. Accordingly, between t1 and t2, the source configures its power source to adjust VBUS to reach to, illustratively, 48V 801. The logic 711 may store a voltage based on the determined power delivery option in response to receiving the accept message, causing the first voltage to be at the first voltage value (e.g. 40V) 802. The logic 711 may disable 803 Sink FETs 705a for the transition of VBUS, decoupling the second terminal 702 from the first terminal 701, lowering the second voltage to 0V 804. The generation of the first voltage causes the PGOOD signal 732 to be a low signal 805 deactivating the down stage converter 722.

At t2, the source has finished adjustment of the VBUS to 48V 801 and the logic 711 may receive a ready message (PS_RDY) representing that the source has finished configuring the VBUS according to the determined power delivery option. VBUS=48V. Between t2 and t3, the first voltage is still at the designated level 802. The logic 711 may, in response to receiving the ready message, cause Sink FETs 705a to operate in enable state 803, coupling the first terminal 701 to the second terminal 702. By enabling Sink FETs 705a, the second voltage begins to increase 804. PGOOD signal is still low 805 as the second voltage is still lower than the first voltage.

At t3, the first voltage 802 is equal to the second voltage 804 (i.e. 40V), causing the PGOOD signal 732 to turn high 805 due to the operation of the comparator 714. In this illustrative example, the first voltage is set to a voltage level that is lower than the negotiated voltage. Accordingly, the down stage converter 722 is activated when VBUS=40V and providing output to the load circuitry 723. Between t3 and an instance of time just before t4, the supply line 703 provides VBUS=48V.

The logic 711 may negotiate a new power option with the source and accordingly the source may configure changing VBUS to a new voltage VBUS=5V, accordingly the VBUS at the source decreases 801. The logic 711 causes Sink FETs 705a to be disabled 803 decoupling the first terminal 701 and the second terminal 702, causing the second voltage to decrease to 0V. During the transition of the second voltage to 0V, the output of the comparator, i.e. PGOOD becomes low 805 causing the down stage converter 722 to be deactivated.

It is to be noted that during any voltage transition period, the logic 711, as PD controller, is expected to continuously monitor source and sink FET output voltages (i.e. the second voltage). After a renegotiation, during a new voltage change event, the logic 711 may set the first voltage before source transitions to the new voltage level corresponding to the renegotiated power option. As soon as new reference is set, the output of the comparator 714, PGOOD signal 732 may become low and accordingly deactivate the down stage converter (DSC).

For the purpose of meeting Psinkstdby as required in USB PD specification, the logic 711 may cause the sink FET 705a to decouple the first terminal 701 from the second terminal 702 before source transitions to the new voltage level. When VBUS voltage transitions to the new level is completed, the source may issue a PS_RDY representing that the electronic device may start drawing the negotiated current. Once PS_RDY is received, the logic 711 may turn the Sink FET 705a ON, coupling the first terminal 701 and the second terminal 702. The logic 711 may continue to monitor the second voltage. Once the second voltage crosses the set threshold in comparator 714, the output of the comparator 714 PGOOD may become high and may enable the down stage converter 722. This way during the voltage transition, when sink path is turning on, there is no load drawn from the VBUS or sink path and results in safe turn-on of the Sink FETs.

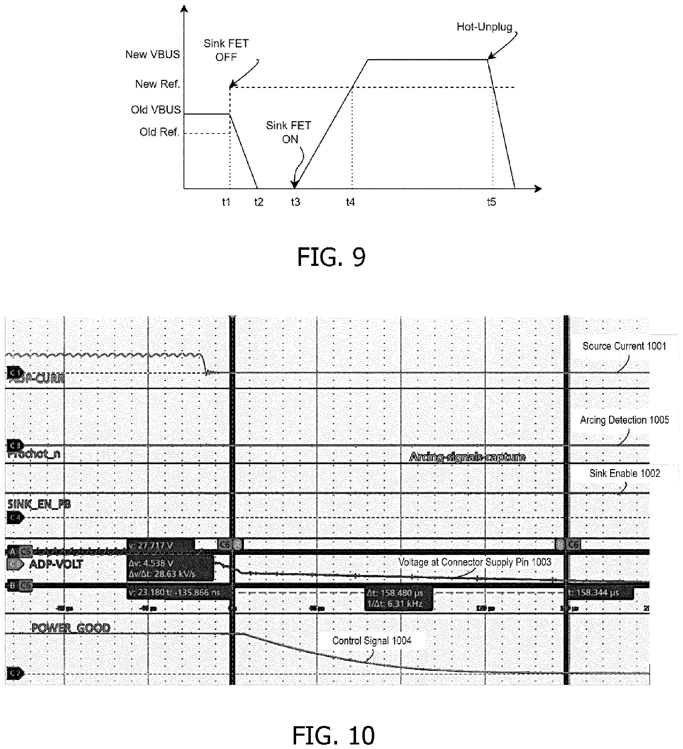

FIG. 9 shows an exemplary illustration of a voltage-time diagram in accordance with various aspects of this disclosure, showing the voltage (dashed-line) that is generated as reference (i.e. the first voltage) and the voltage (solid line; the second voltage) at the second terminal (e.g. the second terminal 702, the second terminal 502, the VR input 622) of the circuit. The first voltage and the second voltage are subject to the comparison. The diagram starts with the second voltage at voltage level Old VBUS set according to an earlier selected power delivery option, and the first voltage at Old Ref. (i.e. old reference voltage) generated according to the earlier selected power delivery option. Controller of the sink device may have performed a PD negotiation operation before instance of time t1 to select a new power delivery option corresponding to a the VBUS being New VBUS voltage. At 11, the controller may decode a received accept message from the source and turn off sink FET (i.e. decouple supply line (e.g. the supply line 703, the supply line 503) from the load) in response to the decoding, causing Old VBUS to drop.

Further, the controller may change the Old Ref. to a New Ref. (i.e. new reference voltage) in the memory, and the voltage generator may start generating voltage at New Ref. as the first voltage. New Ref. is based on the selected new power delivery option causing the control signal (e.g. PGOOD 732, VR Control 632, VR Control 532) provided to the voltage regulator (e.g. the voltage regulator 522, the down stage converter 722) to deactivate the voltage regulator. At time instance t3, the controller may decode a received PS_RDY message from the source and turn on the sink FET (i.e. couple the supply line to the load) and the voltage at the input of the voltage regulator starts to increase, however due to the presence of the control signal deactivating the voltage regulator, no current is drawn by the voltage regulator from the supply line. The first voltage is still higher than the second voltage between t3 and t4.

At time instance t4, the second voltage becomes higher than the first voltage, causing the control signal provided to the voltage regulator to activate the voltage regulator when the second voltage is higher than the first voltage. The voltage regulator may draw current when the voltage at the input of the voltage regulator is above the first voltage, which may result in no damaging stress at the sink FET. After some time, the second voltage reaches the New VBUS for steady state operation.

Just before the time instance t5, a hot-plug event may take place, which may include a disconnection between the source and the sink device, such as plugging out the cable from the input port. No electrical supply power connection exists between the source and the sink device, and the voltage at the supply line decreases rapidly. At this moment, due to the voltage difference between the supply pin at the input port and the corresponding supply pin of the connector of the cable, an arcing might have taken place.

At time instance t5, the second, the second voltage becomes lower than the first voltage, causing the control signal provided to the voltage regulator to deactivate the voltage regulator when the second voltage is lower than the first voltage. The voltage regulator does not draw current, which may result in drop at the voltage difference between the supply pin at the input port and the corresponding supply pin of the connector of the cable, to prevent arcing.

FIG. 10 shows an exemplary graph of emulated signals in accordance with various aspects of this disclosure. The graph shows electrical current 1001 supplied by the source, sink enable signal 1002, the voltage 1003 at the supply pin of the connector of a cable connecting the source and the sink device, and control signal 1004 provided to voltage regulator at the sink device, and capturing of arcing signals (i.e. arcing detection) 1005. As seen from the graph, the emulated circuit results in the load (i.e. the voltage regulator) turning off by de-asserting the control signal (PGOOD) by comparator within 80 microseconds, and the VBUS pin voltage variation of <5V at the connector.

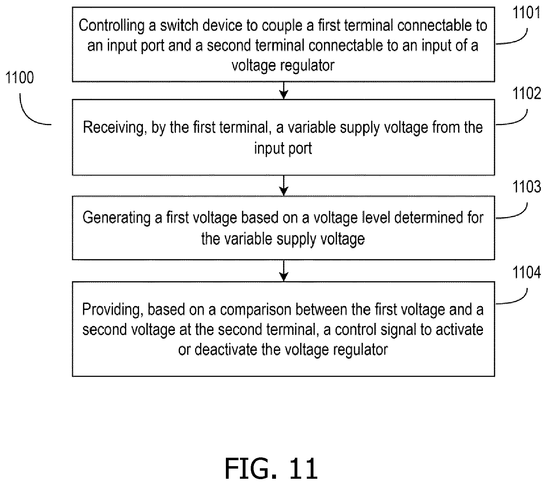

FIG. 11 shows an example of a method. The method 1100 may include: controlling 1101 a switch device to couple a first terminal connectable to an input port and a second terminal connectable to an input of a voltage regulator; receiving 1102, by the first terminal, a variable supply voltage from the input port; generating 1103 a first voltage based on a voltage level determined for the variable supply voltage; providing 1104, based on a comparison between the first voltage and a second voltage at the second terminal, a control signal to activate or deactivate the voltage regulator.

A non-transitory computer-readable medium may include one or more instructions which, if executed by a processor, cause the processor to perform exemplarily the methods outlined in FIG. 11, or any aspects provided in this disclosure.

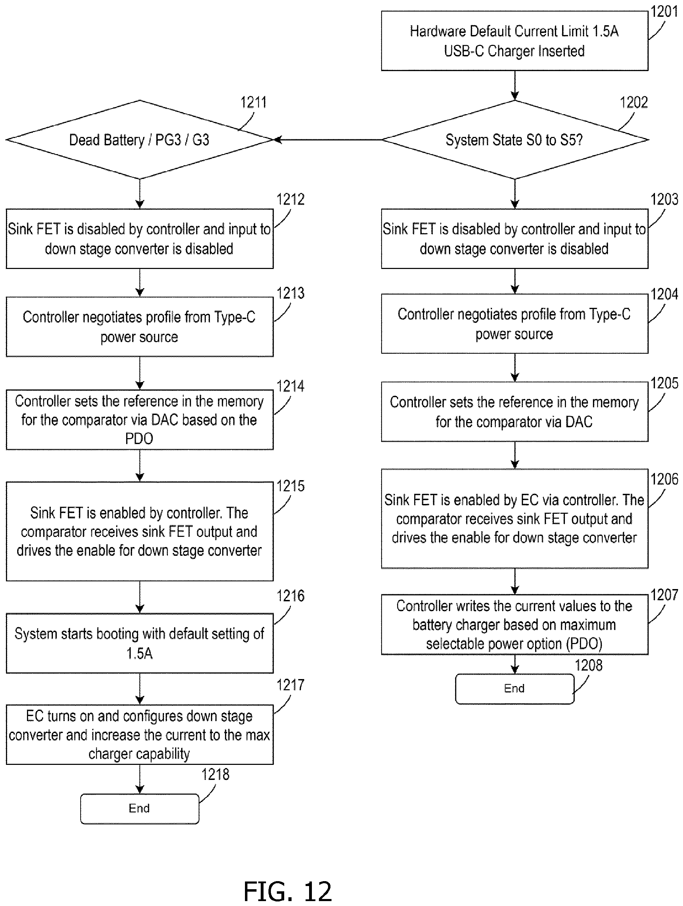

FIG. 12 shows an exemplary flow diagram of various aspects provided in this disclosure. A USB PDCD (e.g. the second USB PDCD 310) provided in this disclosure may implement operations described in the flow diagram. The USB PDCD is configured to operate as a sink device, and including a controller (e.g. the processor 301, the controller 510, the logic 611, the logic 711, etc.), may be configured to implement various functions as described in the flow diagram. In this illustrative example, the USB PDCD further includes a battery and a battery charger circuit configured to control charging operation of the battery with the received electrical supply power from the USB port. In some examples, the flow diagram is considered to begin with an initial attach of the USB PDCD. In some examples, the controller may include a separate EC that is separate from the logic configured to perform USB PD controller functions as described herein.

In 1201, a USB-C cable of which at one end connected to a source USB PDCD is inserted into input port of the USB PDCD. Accordingly, the USB PDCD may begin receiving VBUS with a default current limit of 1.5A. In 1202, the controller may check if the current power state of the USB PDCD is any one of S0 to S5, which may include power states of the USB PDCD, in which the USB PDCD is at working state, in a sleep state, in a hibernate state or in a shutdown state.

If the outcome of the check 1202 indicates that the current power state of the USB PDCD is one of S0 to S5, in 1203 the controller may disable the Sink FET, thereby the voltage input of the down stage converter is disabled. In 1204, the controller may negotiate with the source USB PDCD and select a power delivery option from power delivery options proposed by the source USB PDCD. In 1205, the controller may set a voltage level value in the memory based on the selected power delivery option for generation of the first voltage by a DAC, which is to be provided to an input of the comparator. In 1206, the controller may enable the Sink FET (e.g. in response to received ready message), and Sink FET output (i.e. the second voltage) is fed to another input of the comparator for the comparison. Once the Sink FET output reaches to the first voltage, the comparator may provide the control signal activating the down stage converter. In 1207, the controller may further determine a maximum power delivery option and write current values corresponding to the determined maximum power delivery option for the use of the battery charger circuit for charging the battery. Illustratively, the corresponding current values includes maximum current supported by the selected power delivery option. In 1208, the flow is finalized.

If the outcome of the check 1202 indicates that the current power state of the USB PDCD is not one of S0 to S5, in 1211 the controller may further check if the USB PDCD is in a state of a dead battery, or if PG3 or G3 pins are triggered. If so, in 1212 the controller may disable the Sink FET, thereby the voltage input of the down stage converter is disabled. In 1213, the controller may negotiate with the source USB PDCD and select a power delivery option from power delivery options proposed by the source USB PDCD. In 1214, the controller may set a voltage level value in the memory based on the selected power delivery option for generation of the first voltage by a DAC, which is to be provided to an input of the comparator. In 1215, the controller may enable the Sink FET (e.g. in response to received ready message), and Sink FET output (i.e. the second voltage) is fed to another input of the comparator for the comparison. Once the Sink FET output reaches to the first voltage, the comparator may provide the control signal activating the down stage converter. In 1216, the operating system of the USB PDCD may start booting with the default setting of 1.5A. In 1217, responsive to the booting, the EC may turn on and the controller may, via the EC, configure down stage converter and increase the current according to current options supported by the selected power delivery option. In 1218, the flow is finalized.

The following examples pertain to further aspects of this disclosure.

In example 1, the subject matter includes a circuit. The circuit may include: a first terminal connectable (e.g. couplable) to an input port, the first terminal is configured to receive a variable supply voltage; a second terminal connectable to an input of a voltage regulator; a switch device configured to couple the first terminal and the second terminal; a controller configured to: control the switch device; generate a first voltage based on a voltage level determined for the variable supply voltage; provide, based on a comparison between the first voltage and a second voltage at the second terminal, a control signal to activate or deactivate the voltage regulator.

In example 2, the subject matter of example 1, can optionally include that the control signal includes an enable signal to activate the voltage regulator.

In example 3, the subject matter of example 1 or example 2, can optionally include that the controller is configured to control the switch device to decouple the first terminal and the second terminal during a voltage transition of the variable supply voltage from a first voltage level to a second voltage level.

In example 4, the subject matter of any one of examples 1 to 3, can optionally include that the controller is configured to control the switch device to couple the first terminal and the second terminal based on a ready signal received from the input port.

In example 5, the subject matter of any one of examples 1 to 4, can optionally include that the controller is configured to determine the voltage level for the variable supply voltage by a negotiation operation; can optionally include that the controller includes a memory configured to store the determined voltage level.

In example 6, the subject matter of any one of examples 1 to 5, can optionally include that the controller further includes a comparator, can optionally include that an input of the comparator is coupled to the second terminal.

In example 7, the subject matter of example 6, can optionally include that the comparator is configured to compare the second voltage with the first voltage.

In example 8, the subject matter of example 6 or example 7, can optionally include that the comparator is configured compare the second voltage with the first voltage in a first operation mode and the comparator is configured to compare the second voltage with a voltage at the first terminal in a second operation mode.

In example 9, the subject matter of example 8, can optionally include that the controller is configured to generate the first voltage with a voltage level that is different from the voltage level determined for the variable supply voltage by a predefined amount.

In example 10, the subject matter of example 8 or example 9, can optionally include that the controller further includes a digital to analog converter (DAC) configured to generate the first voltage based on the determined level.

In example 11, the subject matter of any one of examples 6 to 10, can optionally include that the comparator is configured to output the control signal to control the voltage regulator.

In example 12, the subject matter of any one of examples 1 to 11, may further include the voltage regulator; can optionally include that the voltage regulator is configured to draw a current from the second terminal when the voltage regulator is activated; can optionally include that the voltage regulator further includes an enable input to receive the control signal.

In example 13, the subject matter of example 12, can optionally include that the voltage regulator is configured to operate in a deactivated mode when the voltage regulator is not activated.

In example 14, the subject matter of example 12 or example 13, can optionally include that the voltage regulator includes a DC to DC converter to output a system voltage based on the voltage at the input of the voltage regulator.

In example 15, the subject matter of any one of examples 12 to 14, can optionally include that the voltage regulator includes a down-stage converter or a buck converter.

In example 16, the subject matter of any one of examples 1 to 15, can optionally include that the input port is an universal serial bus (USB) port and the received supply voltage is a VBUS voltage.

In example 17, the subject matter of example 16, can optionally include that the controller is a USB power delivery controller.

In example 18, the subject matter of example 16 or example 17, can optionally include that the USB port is a USB Type-C port.

In example 19, the subject matter of any one of examples 1 to 18, can optionally include that the switch device includes at least one transistor configured to couple the first terminal and the second terminal based on a gate signal received from the controller.

In example 20, the subject matter of example 19, can optionally include that the at least one transistor is a field effect transistor (FET).

In example 21, the subject matter of example 20, can optionally include that the switch device includes a first n-type FET configured to operate as a sink switch and a second n-type FET configured to operate as a source switch.

In example 22, the subject matter of example 21, can optionally include that the controller includes a gate driver configured to drive a gate of each transistor of the at least one transistor.

In example 23, an electronic device may include: an input port; a circuit of any one of examples 1 to 22; one or more system components configured to operate with a system supply voltage provided by the voltage regulator.

In example 24, the electronic device of example 23, may further include a battery; can optionally include that the voltage regulator includes a battery charger controller.

In example 25, the subject matter includes a method that may include: controlling a switch device to couple a first terminal connectable to an input port and a second terminal connectable to an input of a voltage regulator; receiving, by the first terminal, a variable supply voltage from the input port; generating a first voltage based on a voltage level determined for the variable supply voltage; providing, based on a comparison between the first voltage and a second voltage at the second terminal, a control signal to activate or deactivate the voltage regulator.

In example 26, the subject matter of example 25, can optionally include that the control signal includes an enable signal to activate the voltage regulator.

In example 27, the subject matter of example 25 or example 26, may further include: controlling the switch device to decouple the first terminal and the second terminal during a voltage transition of the variable supply voltage from a first voltage level to a second voltage level.

In example 28, the subject matter of any one of examples 25 to 27, may further include: controlling the switch device to couple the first terminal and the second terminal based on a ready signal received from the input port.

In example 29, the subject matter of any one of examples 25 to 28, may further include: determining the voltage level for the variable supply voltage by a negotiation operation; storing the determined voltage level into a memory.

In example 30, the subject matter of any one of examples 25 to 29, may further include: comparing, by a comparator, can optionally include that an input of the comparator is coupled to the second terminal.

In example 31, the subject matter of example 30, may further include: comparing, by the comparator, the second voltage with the first voltage.

In example 32, the subject matter of example 30 or example 31, can optionally include that the comparing includes comparing the second voltage with the first voltage in a first operation mode, and comparing the second voltage with a voltage at the first terminal in a second operation mode.

In example 33, the subject matter of example 32, may further include: can optionally include that the comparing includes comparing to generate the first voltage with a voltage level that is different from the voltage level determined for the variable supply voltage by a predefined amount.

In example 34, the subject matter of example 32 or example 33, may further include: generating the first voltage based on the determined voltage level.

In example 35, the subject matter of any one of examples 30 to 34, may further include: outputting the control signal to control the voltage regulator.

In example 36, the subject matter of any one of examples 25 to 35, may further include; drawing, by the voltage regulator, a current from the second terminal when the voltage regulator is activated; can optionally include that the voltage regulator further includes an enable input to receive the control signal.

In example 37, the subject matter of example 36, may further include: operating the voltage regulator in a deactivated mode when the voltage regulator is not activated.

In example 38, the subject matter of example 36 or example 37, can optionally include that the voltage regulator includes a DC to DC converter to output a system voltage based on the voltage at the input of the voltage regulator.

In example 39, the subject matter of any one of examples 36 to 38, can optionally include that the voltage regulator includes a down-stage converter or a buck converter.

In example 40, the subject matter of any one of examples 25 to 39, can optionally include that the input port is an universal serial bus (USB) port and the received supply voltage is a VBUS voltage.

In example 41, the subject matter of example 40, can optionally include that the controller is a USB power delivery controller.

In example 42, the subject matter of example 40 or example 41, can optionally include that the USB port is a USB Type-C port.

In example 43, the subject matter includes a circuit that may include: a coupling means for coupling a first terminal connectable to an input port and a second terminal connectable to an input of a voltage regulator; a receiving means for receiving, by the first terminal, a variable supply voltage from the input port; generating means for generating a first voltage based on a voltage level determined for the variable supply voltage; a providing means for providing a control signal, based on a comparison between the first voltage and a second voltage at the second terminal, to the voltage regulator.

In example 44, the subject matter of example 43, can optionally include that the control signal includes an enable signal to activate the voltage regulator.

In example 45, the subject matter of example 43 or example 44, may further include: a controlling means for controlling the coupling means; can optionally include that the controlling means is configured to control the coupling means to decouple the first terminal and the second terminal during a voltage transition of the variable supply voltage from a first voltage level to a second voltage level.

In example 46, the subject matter of any one of examples 43 to 45, can optionally include that the controlling means is configured to control the coupling means to couple the first terminal and the second terminal based on a ready signal received from the input port.

In example 47, the subject matter of any one of examples 43 to 46, can optionally include that the controlling means further includes means for determining the voltage level for the variable supply voltage by a negotiation operation; can optionally include that the controlling means includes a memory for storing the determined voltage level.

In example 48, the subject matter of any one of examples 43 to 47, can optionally include that the controlling means further includes a comparing means, can optionally include that an input of the comparing means is coupled to the second terminal.

In example 49, the subject matter of example 48, can optionally include that the comparing means is configured to compare the second voltage with the first voltage.

In example 50, the subject matter of example 6 or example 7, can optionally include that the comparing means is to compare the second voltage with the first voltage in a first operation mode and the comparing means is to compare the second voltage with a voltage at the first terminal in a second operation mode.

In example 51, the subject matter of example 50, can optionally include that the generating means is to generate the first voltage with a voltage level that is different from the voltage level determined for the variable supply voltage by a predefined amount.

In example 52, the subject matter of example 50 or example 51, can optionally include that the generating means is to generate the first voltage based on the determined level.

In example 53, the subject matter of any one of examples 48 to 52, can optionally include that the comparing means is configured to output the control signal to control the voltage regulator.

In example 54, the subject matter of any one of examples 43 to 53, may further include the voltage regulator; can optionally include that the voltage regulator is configured to draw a current from the second terminal when the voltage regulator is activated; can optionally include that the voltage regulator further includes an enable input to receive the control signal.

In example 55, the subject matter of example 54, can optionally include that the voltage regulator is configured to operate in a deactivated mode when the voltage regulator is not activated.

In example 56, the subject matter of example 54 or example 55, can optionally include that the voltage regulator includes a DC to DC converter to output a system voltage based on the voltage at the input of the voltage regulator.

In example 57, the subject matter of any one of examples 54 to 56, can optionally include that the voltage regulator includes a down-stage converter or a buck converter.

In example 58, the subject matter of any one of examples 43 to 57, can optionally include that the receiving includes a universal serial bus (USB) port and the received supply voltage is a VBUS voltage.

In example 59, the subject matter of example 58, can optionally include that the controlling means is a USB power delivery controller.

In example 60, the subject matter of example 58 or example 59, can optionally include that the USB port is a USB Type-C port.

In example 61, the subject matter of any one of examples 43 to 60, can optionally include that the coupling means includes at least one transistor configured to couple the first terminal and the second terminal based on a gate signal received from the controlling means.

In example 62, the subject matter of example 61, can optionally include that the at least one transistor is a field effect transistor (FET).

In example 63, the subject matter of example 62, can optionally include that the coupling means includes a first n-type FET configured to operate as a sink switch and a second n-type FET configured to operate as a source switch.

In example 64, the subject matter of example 63, can optionally include that the controlling means includes a gate driver configured to drive a gate of each transistor of the at least one transistor.

In example 65, an electronic device may include: an input port; a circuit of any one of examples 43 to 64; one or more system components configured to operate with a system supply voltage provided by the voltage regulator.

In example 66, the electronic device of example 65, may further include a battery; can optionally include that the voltage regulator includes a battery charger controller.

In example 67, circuitry may include: an input port configured to receive a variable supply voltage; a voltage regulator configured to convert voltage received at an input of the voltage regulator; a switch circuit coupled to the input port, the switch circuit is configured to control an electrical connection configured to provide the received variable supply voltage to the input of the voltage regulator; a control circuit configured to generate a reference voltage based on a voltage level set for the variable supply voltage, and provide, based on a comparison between the reference voltage and a second voltage at the input of the voltage regulator; a control signal to enable or disable an operation of the voltage regulator.

In example 68, the circuitry of example 67, can optionally include that the circuitry includes aspects of the subject matter of any one of examples 1 to 22, or any aspect or feature described in the disclosure.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component" "system" "circuit" "element," "circuitry" " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. A circuit comprising:
a first terminal couplable to an input port, the first terminal is configured to receive a variable supply voltage;
a second terminal couplable to an input of a voltage regulator;
a switch device configured to couple the first terminal and the second terminal;
a controller configured to:
control the switch device;
generate a first voltage based on a voltage level determined for the variable supply voltage;
provide, based on a comparison between the first voltage and a second voltage at the second terminal, a control signal to activate or deactivate the voltage regulator.

2. The circuit of claim 1,
wherein the control signal comprises an enable signal to activate the voltage regulator.

3. The circuit of claim 1 or claim 2,
wherein the controller is configured to control the switch device to decouple the first terminal and the second terminal during a voltage transition of the variable supply voltage from a first voltage level to a second voltage level.

4. The circuit of any one of claims 1 to 3,
wherein the controller is configured to control the switch device to couple the first terminal and the second terminal based on a ready signal received from the input port.

5. The circuit of any one of claims 1 to 4,
wherein the controller is configured to determine the voltage level for the variable supply voltage by a negotiation operation;
wherein the controller comprises a memory configured to store the determined voltage level.

6. The circuit of any one of claims 1 to 5,
wherein the controller further comprises a comparator, wherein an input of the comparator is coupled to the second terminal;
wherein the comparator is configured to compare the second voltage with the first voltage;
wherein the comparator is configured to output the control signal to control the voltage regulator.

7. The circuit of claim 6,
wherein the controller is configured to generate the first voltage with a voltage level that is different from the voltage level determined for the variable supply voltage by a predefined amount.

8. The circuit of claim 6 or claim 7,
wherein the controller further comprises a digital to analog converter (DAC) configured to generate the first voltage based on the determined level.

9. The circuit of any one of claims 1 to 8, further comprising the voltage regulator;
wherein the voltage regulator is configured to draw a current from the second terminal when the voltage regulator is activated;
wherein the voltage regulator further comprises an enable input to receive the control signal.

10. The circuit of claim 9,
wherein the voltage regulator comprises a DC to DC converter to output a system voltage based on the voltage at the input of the voltage regulator.

11. The circuit of any one of claims 1 to 10,
wherein the input port is an universal serial bus (USB) port and the received supply voltage is a VBUS voltage;
wherein the controller comprises a USB power delivery controller; and wherein the USB port is a USB Type-C port.

12. The circuit of any one of claims 1 to 11,
wherein the switch device comprises at least one transistor configured to couple the first terminal and the second terminal based on a gate signal received from the controller.

13. An electronic device comprising:
an input port;
a circuit of any one of claims 1 to 12;
one or more system components configured to operate with a system supply voltage provided by the voltage regulator.

14. A method comprising:
controlling a switch device to couple a first terminal couplabe to an input port and a second terminal couplable to an input of a voltage regulator;
receiving, by the first terminal, a variable supply voltage from the input port;
generating a first voltage based on a voltage level determined for the variable supply voltage;
providing, based on a comparison between the first voltage and a second voltage at the second terminal, a control signal to activate or deactivate the voltage regulator.

15. A circuit comprising:
a coupling means for coupling a first terminal couplable to an input port and a second terminal couplable to an input of a voltage regulator;
a receiving means for receiving, by the first terminal, a variable supply voltage from the input port;
generating means for generating a first voltage based on a voltage level determined for the variable supply voltage;
a providing means for providing a control signal, based on a comparison between the first voltage and a second voltage at the second terminal, to the voltage regulator.
